# EUROPÄISCHE PATENTSCHRIFT

(11) **EP 0 550 505 B1**
(45) Veröffentlichungstag und Bekanntmachung des Hinweises auf die Patenterteilung: **12.06.1996**
(21) Anmeldenummer: 91916494.7
(22) Anmeldetag: 20.09.1991
(51) Int. Cl.: H04N 1/32

(54) **VERFAHREN ZUM ÜBERTRAGEN EINER TELEFAXNACHRICHT**
PROCESS FOR TRAMSMITTING A TELEFAX MESSAGE
PROCEDE POUR LA TRANSMISSION D'UN MESSAGE TELEFAX

(30) Priorität: 28.09.1990 EP 90118723
(43) Veröffentlichungstag der Anmeldung: 14.07.1993
(73) Patentinhaber: SIEMENS AKTIENGESELLSCHAFT, D-80333 München (DE)
(72) Erfinder: SIEGMUND, Wolfgang, D-8000 München 60 (DE); MAYER, Paul, D-8000 München 2 (DE); LINNER, Herbert, D-8300 Ergolding (DE); ZIEMKE, Anette, D-8000 München 80 (DE)
(86) Internationale Anmeldenummer: EP9101800
(87) Internationale Veröffentlichungsnummer: WO9206556

(56) Entgegenhaltungen:
- DE-A- 3 541 003
- US-A- 4 581 656
- US-A- 4 769 719
- Telcom Report, Band 12, Nr. 5, 1989, K. Groebmair: "Neues Telefaxgerät - klein aber fein", Seiten 172-173, siehe den ganzen Artikel
- Review of the Electrical Communication Laboratories, volume 32, No.6, 1984, T. Yatani et al.: "Message handling system programs", pages 985 - 994, see the whole document

## Beschreibung

Die Erfindung betrifft ein Verfahren nach dem Oberbegriff des Anspruchs 1. Ein derartiges Verfahren ist aus US-A- 458 1656 bekannt.

Aus der US-Patentschrift 4, 769,719 ist bereits ein Faksimilesystem bekannt, bei dem eine sendeseitige Station einer empfangsseitigen Station zuvor abgespeicherte Daten und zusätzlich eine Aufforderung übermittelt, das Aufzeichnen empfangener Daten zu bestätigen. Dabei ist vorgesehen, daß die empfangsseitige Station die Zahl der empfangenen Seiten in die Bestätigungsmeldung an die ursprünglich sendeseitige Station einfügt.

Aus der US-Patentschrift 4, 581,656 ist bereits eine Faksimile-Kommunikationsvorrichtung bekannt, die vor der Übertragung von Faksimiledaten eine Information über die Gesamtzahl der zu übertragenen Seiten bildet und den zu übertragenden Daten Seitenzahlen zuordnet. Während der Übertragung wird in der sendeseitigen Station die Zahl der gerade übertragenen Seite entsprechend dem Fortgang der Übertragung aktualisiert. Nach einer Unterbrechung der Übertragung wird diese mit den Faksimiledaten fortgesetzt, die der bei der Unterbrechung übertragenen Seite entsprechen. Diese nach der Unterbrechung als erste übertragene Seite erhält die Seitenzahl der ursprünglichen Zählung. An der empfangsseitigen Station kann aus dem Umstand, daß eine erste eintreffende Seite eine höhere Seitenzahl enthält, geschlossen werden, daß mit dieser Seite eine unterbrochene Übertragung fortgesetzt wird. Bei einer großen Anzahl eintreffender Faksimilenachrichten, insbesondere auch von denselben Absendern, wird für eine Bedienperson einer empfangsseitigen Station das Zusammenfügen unterschiedlicher Nachrichtenteile zeitaufwendig. Eine eindeutige Zuordnung unterschiedlicher Nachrichtenteile anhand der Seitenzahlen scheidet dann aus, wenn mehrere Nachrichten auf der jeweils gleichen Seite unterbrochen werden.

Der Erfindung liegt daher die Aufgabe zugrunde, ein Verfahren der eingangs genannten Art in der Weise auszubilden, daß bei einer Übertragungsunterbrechung zwischen einer sendeseitigen und einer empfangsseitigen Telefaxstation die Zuordnung zusammengehörender Nachrichtenteile an der empfangsseitigen Telefaxstation erleichtert wird.

Erfindungsgemäß wird diese Aufgabe mit den Merkmalen des Anspruchs 1 gelöst.

Der Empfänger einer Telefaxnachricht erhält nach einer Übertragungsunterbrechung einen ausdrücklichen Hinweis darauf, daß die neu zugehenden Informationen die ursprünglich unvollständig zugegangene Telefaxnachricht ergänzen bzw. vervollständigen. Dieser Hinweis, beispielsweise in der Form "Fortsetzung der unterbrochenen Nachricht Nr. x, Seite y, des Absenders (Name, Fax-Nr.)" ermöglicht die eindeutige und schnelle Zuordnung zusammengehöriger Nachrichtenteile. Damit erübrigt es sich für eine Bedienperson, lediglich anhand der Seitenzahlangaben auf eintreffenden Nachrichten zu versuchen, den oder die Teile der Nachricht zu suchen, die durch die eintreffende Nachricht ergänzt werden. Auch erübrigt es sich für die Bedienperson, den Inhalt der einzelnen Nachrichtenteile auf ihre Zusammengehörigkeit zu prüfen, was neben dem hierfür erforderlichen Zeitaufwand auch aus Datenschutzgründen zu vermeiden ist. Der mit der Erfindung erzielte Vorteil erweist sich besonders in den Fällen als ausgeprägt, in denen bei der betreffenden empfangsseitigen Telefaxstation eine Vielzahl von Telefaxnachrichten zugehen. Für den Hinweis auf die Ergänzung bzw. Vervollständigung der Telefaxnachricht ist vorzugsweise eine Sonderseite vorgesehen. Der Empfänger erhält damit im Falle einer wiederaufgenommenen Übertragung eine Faxnachricht, deren erste Seite auf die unvollständig übertragene Nachricht und auf die Fortführung der Übertragung hinweist, beispielsweise in Form des zuvorgenannten Hinweises.

Weitere vorteilhafte Ausführungsformen sind in den Unteransprüchen gekennzeichnet.

Die Erfindung wird nun anhand der Zeichnungen beschrieben.

Es zeigen
- Figur 1: eine Vorrichtung zur Durchführung des erfindungsgemäßen Verfahrens,
- Figur 2: von dem Steuerwerk der erfindungsgemäßen Vorrichtung nach FIG 1 erzeugte Datenbereiche, und
- Figur 3: ein Flußdiagramm des erfindungsgemäßen Verfahren.

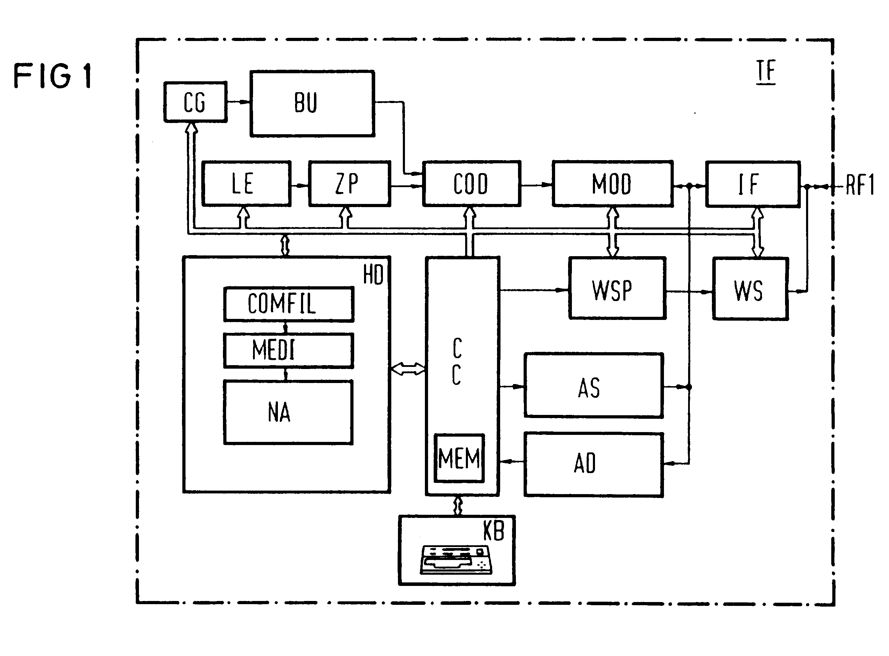

Die in Figur 1 dargestellte Vorrichtung zur Durchführung des Verfahrens gemäß der Erfindung besteht aus einem ansich bekannten Telefaxendgerät (Faksimilegerät). Das Telefaxendgerät TF wird durch ein zentrales Steuerwerk CC gesteuert, dem ein das erfindungsgemäße Verfahren definierendes Datenverarbeitungsprogramm zugeordnet ist. Das Programm ist in einem nichtflüchtigen Speicher HD abgespeichert und wird im Betrieb in einen flüchtigen Speicher MEM geladen.

Das zentrale Steuerwerk CC ist über einen Datenbus mit einem Zeichengenerator CG, mit einer Leseeinheit LE, mit einem Zeilenpuffer ZP, mit einem Codierer COD, mit dem nichtflüchtigen Speicher HD, mit einem Modulator MOD, mit einer Schnittstelleneinheit IF sowie mit einem Wählspeicher WSP und mit einem Wählsender WS verbunden.

Zwischen der Schnittstelleneinheit IF und dem zentralen Steuerwerk CC ist sowohl ein Ablaufsignalsender AS sowie ein Ablaufsignal-Detektor AD geschaltet. Der Zeichengenerator CG ist mit einem Bildsignalumsetzer BU und dieser mit einem Codierer COD verbunden. Ferner sind die Leseeinrichtung LE, der Zeilenpuffer ZP, der Codierer COD, der Speicher HD, der Modulator MOD sowie die Schnittstelleneinheit IF wie in der Figur dargestellt hintereinander geschaltet. Der mit dem Steuerwerk CC verbundene Wählspeicher WSP ist dem Wählsender WS vorgeschaltet.

Mit dem Steuerwerk CC ist ferner eine Bedienungseinheit KB verbunden, die insbesondere Tasten zur Eingabe von Befehlen aufweist

Der Zeichengenerator CG erzeugt Zeichenmusterdaten in Abhängigkeit von Zeichendaten, die das Steuerwerk CC liefert. Der dem Zeichengenerator CG nachgeschaltete Bildsignalumsetzer BU setzt die vom Zeichengenerator CG erzeugten Zeichenmusterdaten in Bildsignalelemente um. Die Bildsignalelemente werden durch den nachgeschalteten Codierer COD codiert und in den Speicher HD übertragen. Der Modulator MOD moduliert die zwischengespeicherten Bildsignalelemente gemäß einem den CCITT-Empfehlungen entsprechenden Modulationsverfahren.

Die Leseeinheit LE liest auf Vorlagen angeordnete Bildelemente zeilenweise und setzt die gelesenen Bildelemente in erste zu übertragende elektrische Bildsignalelemente um. Diese Bildsignalelemente werden in dem Zeilenpuffer ZP zwischengespeichert und anschließend in den Codierer COD übertragen. Die von der Leseeinrichtung LE erzeugten Bildsignalelemente werden vom Codierer COD und den nachgeschalteten Einheiten HD, MOD, IF in gleicher Weise bearbeitet wie die vom Bildsignalumsetzer BU erzeugten Bildsignalelemente.

Der zwischen dem Steuerwerk CC und der Schnittstelleneinheit IF geschaltete Ablaufsender AS überträgt Ablaufsignale an die Schnittstelleneinheit IF, um Bildsignalelemente an jeweils ein bestimmtes empfangsseitiges Telefaxendgerät RF1...RFn im Zusammenwirken mit dem Steuerwerk CC, insbesondere gemäß den CCITT-Empfehlungen zu übertragen.

Der Ablaufsignaldetektor AD erkennt Ablaufsignale, welche von einem empfangsseitigen Telefaxendgerät RF entsprechend einem genormten Faksimile-Übertragungssteuerverfahren übertragen und von der Schnittstelleneinheit IF empfangen werden. Zu den Ablaufsignalen gehören u. a. Signale, die auf eine Unterbrechung der Übertragung zwischen dem sendeseitigen Telefaxendgerät TF und dem empfangsseitigen Telefaxendgerät RF hinweisen. Eine Unterbrechung der Übertragung kann beispielsweise durch eine Auslösemeldung einer öffentlichen Vermittlungseinrichtung signalisiert werden. Der Ablaufsignaldetektor AD stellt Unterbrechungen der Übertragungen auch fest, wenn nach Übertragung einer Vorlage von der sendeseitigen Telefaxstation TF an die empfangsseitige Telefaxstation RF diese kein Empfangsquittungssignal an das sendeseitige Telefaxendgerät TF übermittelt, welches die Übertragung der Bildsignalelemente einer Vorlagenseite bestätigt.

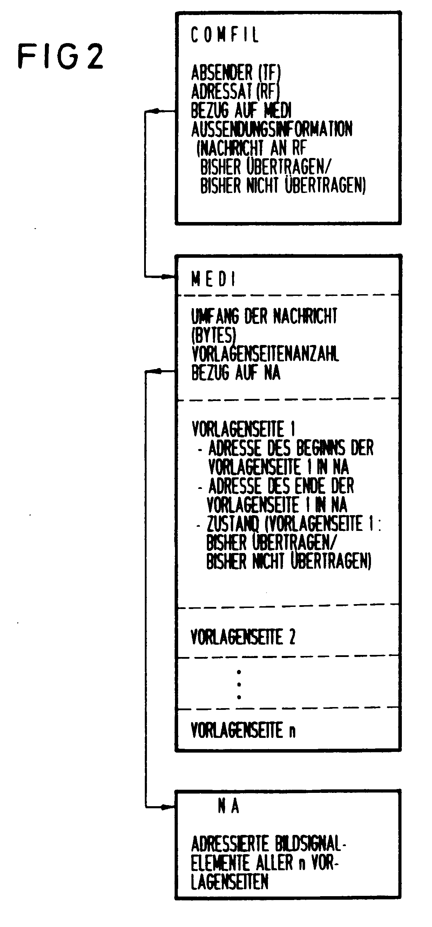

Der in Figur 1 dargestellte nichtflüchtige Speicher HD weist drei miteinander verbundene Einheiten COMFIL, MEDI und NA auf. Diese Einheiten bezeichnen Datenbereiche, die das Programm, das die Schritte des erfindungsgemäßen Verfahrens definiert, generiert. Der erste Datenbereich COMFIL dient der Verwaltung von Sendeaufträgen und enthält - wie Figur 2 zeigt - eine Information über den Absender (das sendeseitige Telefaxendgerät TF), eine Information über den Adressaten (beispielsweise die Rufnummer des empfangsseitigen Telefaxendgerätes RF) sowie eine Bezugsinformation, die auf den dem konkreten ersten Datenbereich zugeordneten zweiten Datenbereich MEDI hinweist. Außerdem kann der Datenbereich COMFIL eine sogenannte Aussendungsinformation aufweisen, die angibt, ob die für den Adressaten bestimmte Nachricht vollständig ausgesendet worden ist bzw. noch zur mindestens teilweisen Aussendung ansteht.

Der zweite Datenbereich MEDI dient der Nachrichtenverwaltung. Er enthält in einem allgemeinen Teil eine Information über den Umfang der Nachricht, d. h. die Anzahl der Bytes sowie eine Information über die Anzahl der Seiten.
Neben dem allgemeinen Teil enthält der Datenbereich MEDI seitenindividuelle Unterbereiche. In jedem seitenindividuellen Unterbereich wird die Adresse im dritten Datenbereich NA für den Beginn der jeweiligen Vorlagenseite sowie die Adresse im Datenbereich NA für das Ende der jeweiligen Vorlagenseite angegeben. Ferner enthält jeder seitenindividuelle Unterbereich eine Zustandsinformation, die angibt, ob die jeweilige Vorlagenseite übertragen bzw. nicht übertragen worden ist. Die Aktualisierung der Zustandsinformation, welche noch beschrieben wird, erfolgt vorzugsweise anhand der Empfangsquittungssignale, die das empfangsseite Endgerät RF im Anschluß an die Übertragung jeweils einer Vorlagenseite an das sendeseitige Telefaxendgerät TF rückübermittelt. Die Aktualisierung de-r Zustandsinformationen kann jedoch auch durch das Steuerwerk CC im Anschluß an die Übertragung einer Vorlagenseite, deren Ende gekennzechnet ist, ohne Verwendung der rückübermittelten Empfangsquittungssignale erfolgen.
Ferner enthält der zweite Datenbereich MEDI eine Bezugsinformation, die auf den Namen des dritten Datenbereichs NA hinweist, der dem zweiten Datenbereich zugeordnet ist. Im dritten Datenbereich NA sind die Bildsignalelemente, die die Leseeinheit LE erzeugt, vorlagenseitenorientiert abgespeichert. Mindestens die Adresse des Vorlagenseitenbeginns und die Adresse des Vorlagenseitenendes wird vom System ermittelt und wird wie beschrieben im zweiten Datenbereich MEDI abgelegt.

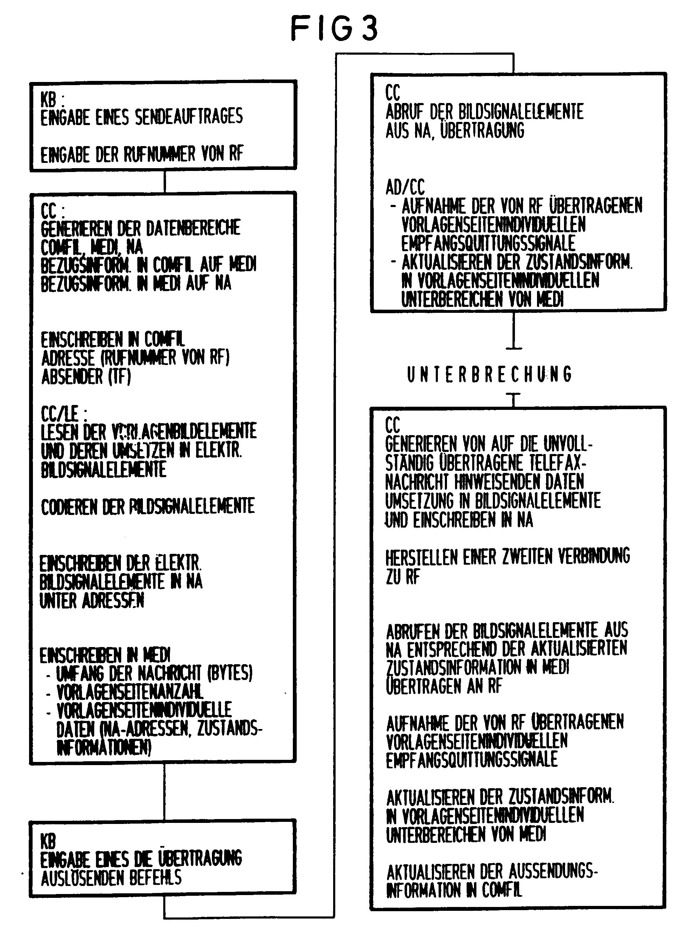

Die einzelnen Verfahrensschritte werden nun anhand des Flußdiagramms in Figur 3 beschrieben. Es wird davon ausgegangen, daß eine Mehrzahl von Vorlagenseiten von einem sendeseitigen Telefaxendgerät TF an ein empfangsseitiges Telefaxendgerät RF übertragen wird, wobei während der Übertragung einer Vorlagenseite die Unterbrechung der Übertragung signalisiert wird.

Zunächst wird ein Auftragsbefehl in die Bedienungseinheit KB eingegeben.

Außerdem wird über die Bedienungseinheit KB die Rufnummer des empfangsseitigen Endgeräts RF1 eingegeben, an welches die die Telefaxnachricht darstellenden Bildsignalelemente übertragen werden soll.

Das Steuerwerk CC generiert die oben beschriebenen drei Datenbereiche COMFIL, MEDI und NA. In den ersten Datenbereich COMFIL schreibt das Steuerwerk eine Absenderinformation ein, die das eigene sendeseitige Telefaxendgerät bezeichnet sowie eine Adressateninformation, die mindestens aus der eingegebenen Rufnummer des Zielempfangsgeräts besteht. Aus einer in den Figuren nicht dargestellten Systemdatenbasis können in Abhängigkeit von der eingegebenen adressatenbezogenen Information weitere adressatenbezogene Informationen wie beispielsweise Name des Empfängers, Bezeichnung des Unternehmens bzw. der Dienststelle usw. gebildet werden.

Die Vorlagen werden in an sich bekannter Weise von der Leseeinheit LE zeilenweise gelesen und in elektrische Bildsignalelemente umgesetzt. Diese werden im Zeilenpuffer ZP zwischengespeichert, vom Codierer COD nach einem vorbestimmten Verfahren codiert, und in den Speicher HD überführt.

Das Steuerwerk CC speichert die umgesetzten Bildsignalelemente im Datenbereich NA unter vorgegebenen Adressen vorlagenseitenorientiert ab und überträgt die Adresse eines jeden Vorlagenseitenbeginns und die Adresse eines jeden Vorlagenseitenendes in die vorlagenseitenindividuellen Unterbereiche des Datenbereichs MEDI. Wenn alle Vorlagen gelesen sind, stellt das Steuerwerk CC die Anzahl der Bytes der Nachricht sowie die Anzahl der Vorlagenseiten fest und schreibt beide Angaben in den allgemeinen Teil des Datenbereichs MEDI ein.

Nach der Abspeicherung der Bildsignalelemente, die die Telefaxnachricht bezeichnen, im Speicher HD bzw. im Datenbereich NA und nach der beschriebenen Abspeicherung der Verwaltungsdaten im Speicher HD bzw. in den Datenfeldern COMFIL und MEDI kann die Übertragung der Bildsignalelemente und von Verwaltungsinformationen an das durch die Rufnummer bestimmte empfangsseitige Telefaxendgerät RF erfolgen. Diese Übertragung kann durch Eingabe eines entsprechenden Befehls in die Bedienungseinheit KB ausgelöst werden, sofern nicht schon die Eingabe des Auftragsbefehls in die Bedienungseinheit die spätere Übertragung auslöst.

Die Übertragung erfolgt in ansich bekannter Weise. Dabei quittiert das empfangsseitige Telefaxendgerät RF den Empfang von Bildsignalelementen, die insgesamt eine Vorlagenseite darstellen durch ein Empfangsquittungssignal. Dieses gelangt über die Schnittstelleneinheit IF an den Ablaufsignal-Detektor AD der das Signal an das Steuerwerk CC weitergibt bzw. das empfangene Signal in eine entsprechende Information umsetzt und diese an das Steuerwerk CC weitergibt. Das Steuerwerk ändert darauf die im zweiten Datenbereich MEDI in dem entsprechenden vorlagenseitenindividuellen Unterbereich abgelegte Zustandsinformation. In dem Unterbereich für die Vorlagenseite 1 ist eine zunächst Zustandsinformation eingetragen, die darauf hinweist, daß die Vorlagenseite 1 nicht übertragen worden ist. Nach Empfang des entsprechenden Empfangsquittungssignales ändert das Steuerwerk CC die Zustandsinformation für die Vorlagenseite 1 dahingehend, daß die geänderte Zustandsinformation den erfolgreichen Abschluß der Übertragung bezeichnet. Damit liegt im System zu jedem Zeitpunkt eine Information darüber vor, welche Vorlagenseite vollständig übertragen worden ist bzw. nicht vollständig übertragen worden ist. Anhand dieser Information kann das Steuerwerk die im Datenbereich COMFIL abgespeicherte Aussendungsinformation aktualisieren. Unabhängig hiervon kann die Aussendungsinformation durch ein Übertragungsquittungssignal des empfangsseitigen Endgeräts aktualisiert werden, das dieses als Anwort auf ein vom sendeseitigen Endgerät übermittelten Signals "Übertragungsende (EOM)" rückübermittelt.

Eine Unterbrechung der Übertragung erkennt das System neben dem Ausbleiben eines Empfangsquittungssignals auch durch eine Auslösemeldung von der öffentlichen Vermittlungseinrichtung. Schließlich kann eine Unterbrechung der Ubertragung durch ein sogenanntes negatives Übertragungsquittungssignal (PIN, Procedural Interrupt Negative) eingeleitet werden, wobei die Verbindung im Dialog zwischen den beiden Telefaxengeräten RF und TF abgebaut wird.

Eine Wiederherstellung der Verbindung kann entweder selbsttätig durch das sendeseitige Telefaxendgerät TF oder ausgelöst durch manuelle Eingabe eines entsprechenden Befehls in die Bedienungseinheit KB ausgelöst werden. Das System verfügt für die selbsttätige Herstellung einer zweiten Verbindung zunächst über eine Wahlwiederholung auslösende Einheiten (CC, WSP, WS) sowie über alle erforderlichen Verwaltungsdaten, insbesondere über die Rufnummer des empfangsseitigen Telefaxendgeräts (in COMFIL), die Aussendungsinformation (in COMFIL) sowie auch über die in MEDI abgespeicherte Information, welche Vorlagenseite(n) im Rahmen einer ersten Verbindung nicht vollständig übertragen worden ist (sind).

Das Steuerwerk CC generiert im Falle einer übertragungsunterbrechung auf die unvollständig übertragene Telefaxnachricht hinweisende Daten. Diese Daten umfassen insbesondere eine Bezeichnung des absendenden sendeseitigen Telefaxendgerätes TF, einen ausdrücklichen Hinweis auf die Fortführung der unterbrochenen Übertragung, gegebenenfalls die Nummer der (ursprünglichen) Telefaxnachricht. Der ausdrückliche Hinweis kann beispielsweise die Form haben "Fortsetzung der unterbrochenen Nachricht Nr.x, Seite y, des Absenders (Name, Fax-Nr.)". Diese Daten werden von dem Zeichenmustergenerator CG erzeugt und durch den Bildsignalumsetzter BU in zweite Bildsignalelemente umgesetzt. Hierzu wird in einem Speicher für jedes Zeichen aus der generierten Datenmenge ein Pixelmuster erzeugt, wobei für jedes Datenzeichen Einzelpunkte erzeugt und in der Weise zusammengesetzt werden, daß die Einzelpunkte das Datenzeichen graphisch wiedergeben. Im Anschluß daran werden die erzeugten Pixelmuster in Telefax-Codierung umgesetzt. Eine derartige Umsetzung ist beispielsweise aus der europäischen Patentanmeldung 0 355 838 bekannt.

Erfindungsgemäß setzt das Steuerwerk CC die zweiten Bildsignalelemente, die die auf die unvollständig übertragene Telefaxnachricht hinweisenden Daten bezeichnen, in ein Vorlagenseitenformat um. Der Empfänger erhält damit eine Sonderseite, insbesondere eine erste Seite mit den Daten, die auf die unvollständig übertragene Telefaxnachricht und auf die Fortführung der Übertragung hinweisen. Das Steuerwerk CC überträgt diese zweiten Bildsignalelemente gemeinsam mit den Bildsignalelementen, die entsprechend der aktualisierten Verwaltungsinformation noch zu übertragen sind, gemeinsam an das empfangsseitige Telefaxendgerät RF. Das Steuerwerk CC greift dabei auf die im zweiten Datenbereich MEDI abgespeicherte und aktualisierte vorlagenseiteindividuelle Zustandsinformation zu sowie auf die entsprechenden Adressen für den Vorlagenseitenbeginn und das Vorlagenseitenende und ruft die entsprechenden Bildsignalelemente aus dem dritten Datenbereich NA ab und initiiert ihre Übertragung.

Der erfolgreiche Abschluß der Ubertragung wird durch ein schon erwähntes Übertragungsquittungssignal des empfangsseitigen Endgeräts übermittelt, das dieses als Antwort auf ein vom sendeseitigen Endgerät übermitteltes Signal "Übertragungsende (EOM)" an das sendeseitige Endgerät rückübermittelt.

## Patentansprüche

1. Verfahren zum Übertragen einer Telefaxnachricht von einem sendeseitigen Telefaxendgerät (TF) zu einem empfangsseitigen Telefaxendgerät (RF), gegebenenfalls mit einer Kennung des sendeseitigen Telefaxendgeräts (TF) wobei ein Steuerwerk (CC) des sendeseitigen Telefaxendgerätes (TF) gelesene Bildsignalelemente in einem Speicher (HD) zwischenspeichert, wobei das Steuerwerk (CC) vorlagenseitenindividuelle Verwaltungsinformationen bildet und diese in Zuordnung zu den Bildsignalelementen zwischenspeichert, wobei das Steuerwerk (CC) die zwischengespeicherten vorlagenseitenindividuellen Verwaltungsinformationen in der Weise aktualisiert, daß das Steuerwerk (CC) nach einer Unterbrechung der Übertragung im Rahmen einer ersten Verbindung eine zweite Verbindung zu dem empfangsseitigen Telefaxendgerät (RF) herstellt und im Rahmen der zweiten Verbindung entsprechend der aktualisierten Verwaltungsinformationen nur die die nicht vollständig übertragene Vorlagenseite bezeichnenden Bildsignalelemente und die die nicht übertragenen Vorlagenseiten bezeichnenden Bildsignalelemente an das empfangsseitige Telefaxendgerät (RF) überträgt,
**dadurch gekennzeichnet,**
daß das Steuerwerk (CC) bei der Unterbrechung der Übertragung auf die unvollständig übertragene Telefaxnachricht hinweisende Daten in Form eines ausdrücklichen Hinweises generiert, diese Daten in zweite Bildsignalelemente umsetzt, diese zweiten Bildsignalelemente in ein Vorlagenseitenformat umsetzt und im Rahmen der zweiten Verbindung die zweiten und die entsprechend der aktualisierten Verwaltungsinformation zu übertragenden Bildsignalelemente gemeinsam an das empfangsseitige Telefaxendgerät (RF) überträgt.

2. Verfahren nach Anspruch 1,
**dadurch gekennzeichnet,**
daß das Steuerwerk (CC) des sendeseitigen Telefaxendgerätes (TF) nach einer Unterbrechung der ersten Verbindung selbsttätig Versuche zur Herstellung der zweiten Verbindung zu dem durch die Rufnummer bestimmten empfangsseitigen Telefaxendgerät (RF) unternimmt.

3. Vorrichtung zur Durchführung des Verfahrens nach einem der Ansprüche 1 oder 2,
**dadurch gekennzeichnet,**
daß die Vorrichtung ein Telefaxendgerät (TF) umfaßt, dem ein Steuerwerk (CC) mit einem das Verfahren definierenden Programm und mindestens ein Speicher (HD, MEM) zugeordnet ist, der erste Datenbereiche (COMFIL, MEDI) zur Aufnahme der Verwaltungsinformationen und einen zweiten Datenbereich (NA) zur Aufnahme mindestens der ersten und gegebenenfalls der zweiten Bildsignalelemente aufweist.

## Claims

1. Method for transmitting a telefax message from a transmitting-end telefax terminal (TF) to a receiving-end telefax terminal (RF), possibly with an identification of the transmitting-end telefax terminal (TF), in which a controller (CC) of the transmitting-end telefax terminal (TF) temporarily stores read image signal elements in a memory (HD), the controller (CC) forming original-page-individual management information items and temporarily storing these in correlation with the image signal elements, the controller (CC) updating the temporarily stored original-page-individual management information items in such a manner that the controller (CC), after an interruption in the transmission during a first call, establishes a second connection to the receiving-end telefax terminal (RF) and, during the second call, only transmits the image signal elements designating the incompletely transmitted original page and the image signal elements designating the untransmitted original pages to the receiving-end telefax terminal (RF) in accordance with the updated management information items, characterized in that the controller (CC), during the interruption in the transmission, generates data indicating the incompletely transmitted telefax message in the form of an express indication, converts these data into second image signal elements, converts them into an original page format and, during the second call, transmits the second image signal elements, and the image signal elements to be transmitted in accordance with the receiving-end telefax terminal (RF).

2. Method according to Claim 1, characterized in that the controller (CC) of the transmitting-end telefax terminal (TF), after an interruption in the first call, automatically makes attempts to establish the second connection to the receiving-end telefax terminal (RF) determined by the directory number.

3. Device for carrying out the method according to one of Claims 1 or 2, characterized in that the device comprises a telefax terminal (TF) which is allocated a controller (CC) containing a program defining the method and at least one memory (HD, HEM) which exhibits first data areas (COMFIL, MEDI) for accommodating the management information items and a second data area (NA) for accommodating at least the first and possibly the second image signal elements.

## Revendications

1. Procédé de transmission d'une information de télécopie d'un terminal (TF) de télécopie émetteur à un terminal (RF) de télécopie récepteur, éventuellement avec une identification du terminal (TF) de télécopie émetteur, un organe (CC) de commande du terminal (TF) de télécopie émetteur mémorisant temporairement des éléments de signaux d'image lus dans une mémoire (HD), l'organe (CC) de commande formant des informations de gestion propres aux pages de l'original et mémorisant temporairement celles-ci en association aux éléments de signaux d'image, l'organe (CC) de commande mettant à jour les informations de gestion propres à chaque page de l'original et mémorisées temporairement de telle sorte que l'organe (CC) de commande établisse, après une interruption de la transmission au cours d'une première communication, une seconde communication avec le terminal (RF) de télécopie récepteur et ne transmette, au cours de la seconde communication, suivant les informations de gestion mises à jour, que les éléments de signaux d'image désignant la page de l'original non transmise complètement et les éléments de signaux d'image désignant les pages de l'original non transmises au terminal (RF) de télécopie récepteur,
caractérisé en ce que
l'organe (CC) de commande génère, lors de l'interruption de la transmission de données indiquant l'information de téléfax transmise de manière incomplète, sous forme d'une indication explicite, convertit ces données en seconds éléments de signaux d'image, convertit ces seconds éléments de signaux d'image en un format de page d'original et transmet, au cours de la seconde communication, le second élément de signaux d'image et les éléments de signaux d'image à transmettre en fonction de l'information de gestion mise à jour, en commun au terminal (RF) de télécopie récepteur.

2. Procédé suivant la revendication 1,
caractérisé en ce que
l'organe (CC) de commande du terminal (TF) de télécopie émetteur entreprend automatiquement, après une interruption de la première communication, des essais d'établissement de la seconde communication vers le terminal (RF) de télécopie récepteur déterminé par le numéro d'appel.

3. Dispositif pour la mise en oeuvre du procédé suivant l'une des revendications 1 ou 2,
caractérisé en ce que
le dispositif comprend un terminal (TF) de télécopie, auquel est associé un organe (CC) de commande comportant un programme définissant le procédé et au moins une mémoire (HD, MEM), laquelle comporte des premiers domaines (COMFIL, MEDI) de données destinés à la réception des informations de gestion et un second domaine (NA) de données destiné à la réception d'au moins les premiers et éventuellement les seconds éléments de signaux d'image.
